# EUROPEAN PATENT APPLICATION

(11) **EP 3 696 406 A1**
(43) Date of publication of application: **19.08.2020**
(21) Application number: 19156942.5
(22) Date of filing: 13.02.2019
(51) Int. Cl.: F03D 9/25, F03D 7/04

(54) **A METHOD FOR COMPUTER-IMPLEMENTED ANALYSIS OF A WIND FARM COMPRISING A NUMBER OF WIND TURBINES**

(71) Applicant: Siemens Gamesa Renewable Energy A/S, 7330 Brande (DK)
(72) Inventor: The designation of the inventor has not yet been filed
(74) Representative: Aspacher, Karl-Georg

(57) **Abstract**

The invention relates to a method for computer-implemented analysis of a wind farm (1) comprising a number of wind turbines (2), wherein at each time point of one or more time points the following steps are performed:
i) applying an object detection algorithm (ODA) to a digital image (IM) showing the current state of the earth's ground in a surrounding area of the wind farm (1), resulting in the extraction and localization of a number of detected objects (3) not belonging to the wind farm (1) within the image (IM), where each detected object (3) is of an object type (OT) out of a number of object types (OT);
ii) determining an information on whether there is a change with respect to the number of detected objects (3) in comparison to an earlier state of the earth's ground in the surrounding area of the wind farm (1), the change enabling an adaptation of the operation of the wind farm (1) in compliance with a predetermined curtailment (CU) limiting one or more effects resulting from the operation of the wind farm (1), and/or determining a number of operation constraints (OC) for the wind farm (1) based on the number of detected objects (3) such that the wind farm (1) generates maximum electric energy (AEP) within a predetermined time interval on condition that a predetermined curtailment (CU) limiting one or more effects resulting from the operation of the wind farm (1) is complied with.

## Description

The invention refers to a method and a system for computer-implemented analysis of a wind farm comprising a number of wind turbines. Furthermore, the invention refers to a corresponding computer program product and a corresponding computer program.

During the planning phase of a wind farm, a surrounding area around the planned location of the wind farm is analyzed. In this analysis, all impacts of wind turbines on humans and particularly residents in the neighborhood of the farm are evaluated. As a result, operation constraints are determined in order to comply with a curtailment limiting the adverse effects resulting from the operation of the wind farm.

A curtailment may refer to a maximum sound pressure level, particularly during night, at residential buildings around the wind farm. To comply with this curtailment, the wind farm has to be operated with reduced power resulting in less speed of the rotor blades of wind turbines and thus in less sound. Another curtailment may refer to a limited operation time of the wind turbines in order to reduce the adverse effects of shadow flickering for residents in the neighborhood of a wind farm. To comply with this curtailment, fixed operation intervals for the turbines are defined.

After having determined operation constraints in the planning phase, the wind farm launched after planning is usually operated based on the operation constraints for its complete life time even in case that sources of curtailment disappear in the meantime.

It is an object of the invention to provide a method for computer-implemented analysis of a wind farm in order to automatically determine an efficient operation of the farm.

This object is solved by the method according to claim 1. Preferred embodiments of the invention are defined in the dependent claims.

The method of the invention provides a computer-implemented analysis of a wind farm comprising a number of wind turbines, i.e. at least one wind turbine. This wind farm has already been installed at a location on the earth's ground.

In method of the invention, the following steps i) and ii) are performed at each time point of one or more time points. In step i), an object detection algorithm is applied to a digital image showing the current state of the earth's ground in a surrounding area of the wind farm. This object detection algorithm results in the extraction and localization of a number of detected objects not belonging to the wind farm within the image, where each detected object is of an object type out of a number of object types. Relevant object types may be defined beforehand. As an object detection algorithm, any prior art algorithm for analyzing images may be used. In a particularly preferred embodiment, the object detection algorithm is based on a trained data driven model where images comprising known objects of corresponding object types were used as training data so that objects of these object types can indeed be extracted. In a particular preferred embodiment, the data driven model is a neural network. Preferably, a Convolutional Neural Network well known from the prior art is used. Convolutional Neural Networks are particularly suitable for processing image data.

In a first variant of step ii) of the method, an information is determined on whether there is a change with respect to the number of detected objects (i.e. whether objects have disappeared or occurred and whether properties of existing objects have changed) in comparison to an earlier state (i.e. a state at a time point before the current state) of the earth's ground in the surrounding area of the wind farm, the change enabling an adaptation of the operation of the wind farm in compliance with a predetermined curtailment limiting one or more (adverse) effects resulting from the operation of the wind farm. Hence, in this first variant, only an indication of a possible adaptation of the operation of the wind farm due to environmental changes is given. E.g., this information may be used by the operator of the wind farm in order to obtain permission for an adapted operation of the wind farm from authorities. Preferably, the earlier state of the earth's ground is derived from a corresponding (earlier) image by applying an object detection algorithm, as it is the case for the current state of the earth's ground. However, the earlier state of the earth's ground may also be based on another digital description not being based on an image.

In a second variant of step ii) which can be performed alone or in combination with the first variant, a number of operation constraints for the wind farm is (automatically) determined based on the number of detected objects such that the wind farm generates maximum electric energy within a predetermined time interval on condition that a predetermined curtailment (corresponding to the above curtailment if the first and second variants are combined) limiting one or more (adverse) effects resulting from the operation of the wind farm is complied with. A predetermined time interval may refer e.g. to one year so that the maximum electric energy refers to the maximum annual energy production of the wind farm. Methods for automatically determining operation constraints based on objects in the neighborhood of a wind farm are known for a skilled person and, thus, will not be described in detail herein.

The invention is based on the finding that an automatic analysis of images of the earth's ground around a wind farm enables to derive objects relevant for operation constraints based on a predetermined curtailment defined for the wind farm. Hence, it is possible to update operation constraints based on newly acquired images. As a consequence, the operation of a wind farm can be adapted to changing environmental conditions.

In a particularly preferred embodiment, the one or more effects limited by the predetermined curtailment refer to sound and/or shadow flickering and/or ice throw caused by the wind farm. The predetermined curtailment includes those effects by defining corresponding restrictions, e.g. by defining a maximum sound pressure level at residential buildings in the surrounding area of the wind farm or by defining a maximum operation time of the wind turbines during day in order to limit sound propagation and/or shadow flickering or by defining a maximum rotation speed of the wind turbine rotors in order to avoid ice throw during winter.

In a particularly preferred embodiment, the above number of object types comprises the following types:
- one or more building types, preferably residential and non-residential buildings, and/or
- one or more traffic route types, preferably one or more road types (e.g. walkway, cycling path, main road, secondary road, highway and the like), and/or
- one or more ground inclination types, and/or
- one or more tree types.

In a variant of the above embodiment, only the object types "building" and/or "traffic route" and/or "ground inclination" and/or "tree" may be defined.

In a particularly preferred embodiment, the one or more detected objects are associated with one or more properties thereof which are extracted by the object detection algorithm. This enables a very exact determination of operation constraints.

In another preferred embodiment, the one or more properties of the detected objects refer to the height of a detected object which is particularly useful when considering sound and/or shadow flickering as the effects limited by the predetermined curtailment.

The above steps i) and ii) are preferably performed several times based on certain criteria. In a preferred embodiment, steps i) and ii) are repeated in case that an updated digital image is available, e.g. from a database storing those images. In another preferred embodiment, steps i) and ii) are repeated in case that the predetermined curtailment has changed. This enables an adaptation of the operation of the wind farm to changed regulations of authorities.

The digital image processed by the method of invention is preferably taken by a flying object over ground, particularly by a satellite or a plane or a drone. Nevertheless, the image may also be taken by one or more cameras installed on ground at the location of the wind farm, e.g. at the position of the nacelle of one or more wind turbines.

In a particularly preferred embodiment, the information on whether there is a change with respect to the number of detected objects in comparison to an earlier state of the earth's ground in the surrounding area of the wind farm and/or the number of operation constraints for the wind farm and/or the maximum electric energy as determined in step ii) are output via a user interface. This user interface may be accessible for staff of the operator of the wind farm. Hence, the operator has the option to change the operation of the wind farm or to negotiate with authorities in order to achieve an adapted operation resulting in higher energy output.

Besides the above method, the invention refers to a system for computer-implemented analysis of a wind farm comprising a number of wind turbines, where the system comprises a processor configured to carry out the method according to the invention or according to one or more embodiments of the invention.

The invention also refers to a computer program product with program code, which is stored on a non-transitory machine-readable carrier, for carrying out the method according to the invention or according to one or more embodiments of the invention, when the program code is executed on a computer.

Furthermore, the invention refers to a computer program with program code for carrying out the method according to the invention or according to one or more embodiments of the invention, when the program code is executed on a computer.

In the following, an embodiment of the invention will be described in detail with respect to the accompanying drawings wherein:
- Fig. 1: shows a flow chart illustrating the steps according to a method based on an embodiment of the invention; and
- Fig. 2: shows a system for performing the method as shown in Fig. 1.

The method as described in the following refers to the analysis of a wind farm where the operation of the wind farm is subjected to a curtailment limiting one or more adverse effects for humans resulting from the operation of the wind farm. In a preferred embodiment, the curtailment refers to restrictions given by an authority in order to limit sound and shadow flickering of the wind farm for residential buildings in the surrounding area of the wind farm. Sound and shadow flickering is caused by the rotation of the wind turbine rotors of the wind farm.

The above curtailment can be defined in various ways. E.g., a curtailment with respect to sound can be such that a sound pressure level caused by the wind farm at the location of a residential building must not exceed a certain threshold. Furthermore, the sound curtailment may also be coupled to certain time periods, e.g. the above threshold may only be applicable for the operation of the wind farm during night or different thresholds for night and day may be defined.

Furthermore, a curtailment with respect to shadow flickering may be given by a maximum amount of operation hours of the wind farm in a given time interval, e.g. within one year. Further criteria may apply with respect to shadow flickering, e.g. the restriction of the operation hours may only be applicable during day time or in case that the sun is shining. The condition that the sun is shining can be determined based on corresponding sensors positioned at the location of the wind farm.

Another curtailment may refer to the operation of the wind farm during possible icing conditions, e.g. in order to limit ice throw caused by the rotation of the rotor blades of the wind turbines. In this case, a curtailment with respect to a maximum rotation speed of the rotor blades of the wind turbines may be given during winter or during periods with low temperatures in case that humans are expected in the surrounding area of the wind farm, e.g. in case that a street is located near the wind farm.

In the embodiment described herein, a wind farm already in operation is analyzed based on satellite images in order to get information about changes in the surrounding area of the wind farm. Those changes may allow an adaptation of the operation of the wind farm resulting in higher electric energy production whilst a given curtailment is still complied with.

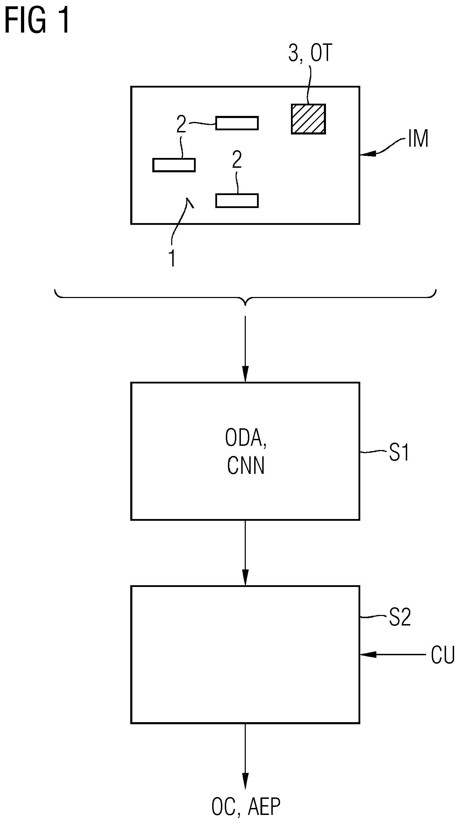

The method according to Fig. 1 has access to digital satellite images IM provided from the earth's ground in the surrounding area of the wind farm. An example of a satellite image is shown schematically in Fig. 1. The digital image comprises the wind farm 1 in the form of several wind turbines 2 which are shown schematically as horizontal bars. Furthermore, the image includes an object 3 of a given object type OT. In the image shown in Fig. 1, this object type is a residential building, i.e. the object 3 is a building in which humans live. The object 3 is only shown schematically as a hatched square.

The satellite images IM are taken from a central database which may be a database publicly available. Furthermore, the method of the invention has access to a curtailment CU in the form of digital data given by an authority in order to limit adverse effects resulting from the operation of the wind farm, e.g. the above described effects concerning sound, shadow flickering and ice throw. This curtailment will be processed in step S2 of Fig. 1 which will be described further below.

According to the method of Fig. 1, steps S1 and S2 are performed in case that an updated satellite image IM is available in order to check whether the operation of the wind farm can be adapted. E.g., in case that objects in the surrounding area of the wind farm have changed or have disappeared, certain aspects of the curtailment may no longer be relevant allowing a higher energy production of the wind farm. Particularly, it may happen that the residential building 3 shown in the image IM disappears at a later time point so that a curtailment with respect to sound and shadow flickering is no longer relevant resulting in the possibility to operate the wind farm with higher energy output.

In the method of Fig. 1, the image IM is subjected to a well-known object detecting algorithm EDA in step S1. This object detection algorithm extracts objects of certain object types from the image together with the locations of these objects within the image. In a preferred embodiment, object types in the form of buildings, traffic routes, ground inclinations and trees are extracted where the object types may be refined. E.g., it can be extracted if a residential or non-residential building is located adjacent to the wind farm, which kind of traffic route (walkway, main road, secondary road, highway and the like) is located in the surrounding area of the wind farm or which trees are growing in the neighborhood of the wind farm. Moreover, in a particularly preferred embodiment, additional properties of the objects detected in the image IM are derived, particularly the height of the objects. Based on the image IM, the object 3 having the object type "residential building" is detected in step S1.

In the embodiment described herein, a well-known algorithm based on a Convolutional Neural Network CNN is used for detecting objects within the image. The Convolutional Neural Network is trained based on training images having known objects of known object types shown therein. As known from the prior art, a Convolutional Neural Network comprises convolutional layers followed by pooling layers as well as fully connected layers in order to extract and classify the objects within an image.

After having performed step S1, the information about the detected objects is used in order to determine one or more operation constraints OC of the wind farm taking into account the above mentioned curtailment CU provided as digital data in step S2.

The operation constraints OC for the wind farm are defined such that the wind farm generates maximum electric energy within a predetermined time interval on condition that the curtailment CU is complied with. In the embodiment described herein, the maximum electric energy refers to the maximum annual energy production AEP.

The result of the method of Fig. 1, namely the operation constraints OC and the maximum annual energy production AEP are provided via a user interface to the operator of the wind farm. It may happen that due to environmental changes detected in an updated satellite image, e.g. due to the demolition of residential buildings or changes of use (from residential to industrial), the original operation constraints OC resulting from the curtailment CU have been changed allowing a much higher annual energy production AEP. This information may be used by the operator in order to contact the corresponding authority having issued the curtailment CU in order to get a permission for an adapted operation resulting in a much higher annual energy production.

The derivation of operation constraints OC based on step S2 of Fig. 1 is well-known to a skilled person and, thus, will not be described in detail. Particularly, the location of residential buildings may be used in order to determine the sound pressure level occurring at the respective building due to the operation of the wind farm. To do so, a sound propagation model is provided from which sound pressure levels at different locations can be derived. Such a sound propagation model may also use additional information from detected objects, e.g. height information of buildings or of ground inclinations. Furthermore, information of trees may be used for determining operation constraints. E.g., it can be detected that a tree or a forest (several trees) is located between the wind farm and a residential building, thus resulting in less or no shadow flickering which leads to relaxed operation constraints.

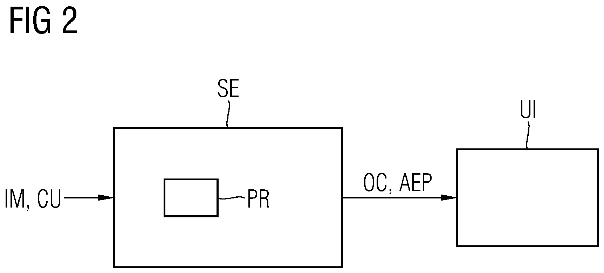

Fig. 2 shows an embodiment of a system in order to perform the method as described with respect to Fig. 1. The system is implemented as a platform based on a central server SE comprising a processor PR which is used in order to perform the above described method steps S1 and S2. To do so, the server SE has access to up-to-date satellite images IM as well as to the curtailment CU where the server preferably can process the data of a plurality of different wind farms. After having performed the method of Fig. 1, the corresponding operation constraints OC and the corresponding maximum annual energy production AEP is provided via user interface UI to an operator of the respective wind farm. The operator can then try to get permission to a changed operation regime from an authority in case that the maximum annual energy production is predicted to increase due to changes in the surroundings of the wind farm which have been detected in an updated satellite image.

The invention as described in the foregoing has several advantages. Particularly, the conditions with respect to the operation of a wind farm can be checked regularly based on updated images of the wind farm. In one embodiment, those images are satellite images. Nevertheless, the images may also refer to images taken by other flying objects (plane or drone) or by a camera installed on ground at the location of the wind farm. As a result of the invention, a higher energy output of a wind farm may be achieved in case that objects relevant for a predetermined curtailment are no longer present or have been changed. Furthermore, it is also possible to perform the method of the invention in case that a curtailment given by an authority has been changed (particularly relaxed) in order to evaluate if the wind farm can be operated with higher energy output.

## Claims

1. A method for computer-implemented analysis of a wind farm (1) comprising a number of wind turbines (2), wherein at each time point of one or more time points the following steps are performed:
i) applying an object detection algorithm (ODA) to a digital image (IM) showing the current state of the earth's ground in a surrounding area of the wind farm (1), resulting in the extraction and localization of a number of detected objects (3) not belonging to the wind farm (1) within the image (IM), where each detected object (3) is of an object type (OT) out of a number of object types (OT);
ii) determining an information on whether there is a change with respect to the number of detected objects (3) in comparison to an earlier state of the earth's ground in the surrounding area of the wind farm (1), the change enabling an adaptation of the operation of the wind farm (1) in compliance with a predetermined curtailment (CU) limiting one or more effects resulting from the operation of the wind farm (1), and/or determining a number of operation constraints (OC) for the wind farm (1) based on the number of detected objects (3) such that the wind farm (1) generates maximum electric energy (AEP) within a predetermined time interval on condition that a predetermined curtailment (CU) limiting one or more effects resulting from the operation of the wind farm (1) is complied with.

2. The method according to claim 1, wherein the one or more effects limited by the predetermined curtailment refer to sound and/or shadow flickering and/or ice throw caused by the wind farm (1).

3. The method according to claim 1 or 2, wherein the number of object types (OT) comprises:
- one or more building types, preferably residential and non-residential buildings, and/or
- one or more traffic route types, preferably one or more road types, and/or
- one or more ground inclination types, and/or
- one or more tree types.

4. The method according to one of the preceding claims, wherein one or more of the detected objects (3) are associated with one or more properties thereof which are extracted by the object detection algorithm (ODA).

5. The method according to claim 4, wherein the one or more properties comprise the height of a detected object (3).

6. The method according to one of the preceding claims, wherein steps i) and ii) are repeated in case that an updated digital image (IM) is available.

7. The method according to one of the preceding claims, wherein steps i) and ii) are repeated in case that the predetermined curtailment (CU) has changed.

8. The method according to one of the preceding claims, wherein the object detection algorithm (ODA) is based on a trained data driven model.

9. The method according to claim 8, wherein the data driven model is a neural network, preferably a Convolutional Neural Network.

10. The method according to one of the preceding claims, wherein the digital image (IM) is an image taken by a flying object over ground, particularly taken by a satellite or a plane or a drone.

11. The method according to one of the preceding claims, wherein the information on whether there is a change with respect to the number of detected objects (3) in comparison to an earlier state of the earth's ground in the surrounding area of the wind farm (1) and/or the number of operation constraints (OC) for the wind farm (1) and/or the maximum electric energy production (AEP) are output via a user interface (UI) .

12. A system for computer-implemented analysis of a wind farm (1) comprising a number of wind turbines (2), where the system comprises a processor (PR) configured to carry out a method, in which at each time point of one or more time points the following steps are performed:
i) applying an object detection algorithm (ODA) to a digital image (IM) showing the current state of the earth's ground in a surrounding area of the wind farm (1), resulting in the extraction and localization of a number of detected objects (3) not belonging to the wind farm (1) within the image (IM), where each detected object (3) is of an object type (OT) out of a number of object types (OT);
ii) determining an information on whether there is a change with respect to the number of detected objects (3) in comparison to an earlier state of the earth's ground in the surrounding area of the wind farm (1), the change enabling an adaptation of the operation of the wind farm (1) in compliance with a predetermined curtailment (CU) limiting one or more effects resulting from the operation of the wind farm (1), and/or determining a number of operation constraints (OC) for the wind farm (1) based on the number of detected objects (3) such that the wind farm (1) generates annual energy production (AEP) within a predetermined time interval on condition that a predetermined curtailment (CU) limiting one or more effects resulting from the operation of the wind farm (1) is complied with.

13. The system according to claim 12, wherein the system is configured to perform a method according to one of claims 2 to 11.

14. A computer program product with program code, which is stored on a non-transitory machine-readable carrier, for carrying out a method according to one of claims 1 to 11 when the program code is executed on a computer.

15. A computer program with program code for carrying out a method according to one of claims 1 to 11 when the program code is executed on a computer.
